# EUROPÄISCHE PATENTSCHRIFT

(11) **EP 1 904 764 B1**
(45) Veröffentlichungstag und Bekanntmachung des Hinweises auf die Patenterteilung: **27.05.2009**
(21) Anmeldenummer: 06763983.1
(22) Anmeldetag: 30.06.2006
(51) Int. Cl.: F16H 57/04

(54) **VERFAHREN ZUR BEEINFLUSSUNG DER TEMPERATUR EINES ELEKTROMECHANISCHEN BAUTEILS UND VORRICHTUNG ZUR DURCHFÜHRUNG DES VERFAHRENS**
METHOD FOR INFLUENCING THE TEMPERATURE OF AN ELECTROMECHANICAL COMPONENT AND DEVICE FOR CARRYING OUT THE METHOD
PROCEDE POUR INFLUER SUR LA TEMPERATURE D'UN COMPOSANT ELECTROMECANIQUE, ET DISPOSITIF SERVANT A LA MISE EN OEUVRE DE CE PROCEDE

(30) Priorität: 13.07.2005 DE 102005032633
(43) Veröffentlichungstag der Anmeldung: 02.04.2008
(73) Patentinhaber: ROBERT BOSCH GMBH, 70442 Stuttgart (DE)
(72) Erfinder: KAEFER, Oliver, 71711 Murr (DE); GERUNDT, Oliver, 71292 Friolzheim (DE)
(86) Internationale Anmeldenummer: PCT/EP2006/063726
(87) Internationale Veröffentlichungsnummer: WO 2007/006663

(56) Entgegenhaltungen:
- EP-A- 0 736 703
- EP-A- 1 348 846
- DE-A1- 19 951 731
- DE-C1- 10 016 640
- US-A- 3 874 183

## Beschreibung

### Stand der Technik

Die Erfindung geht aus von einem Verfahren zur Beeinflussung der Temperatur eines elektromechanischen Bauteils und von einer Vorrichtung zur Durchführung des Verfahrens nach der Gattung der unabhängigen Ansprüche.

Aus der DE 33 43 076 A1 ist eine Vorrichtung bekannt geworden, die sowohl zur Kühlung eines in einem Kraftfahrzeug als Antriebsmotor vorgesehenen Elektromotors als auch zur Innenraumbeheizung eines Kraftfahrzeugs vorgesehen ist. Sowohl dem Innenraum des Kraftfahrzeugs als auch dem Elektromotor können Frischluft oder Umluft zugeführt werden. Zur Trennung der beiden Luftkreisläufe ist ein Wärmetauscher vorgesehen, der die Kühlung des Elektromotors von der Beheizung des Innenraums des Kraftfahrzeugs trennt. Der Elektromotor kann unabhängig von der Beheizung des Innenraums gekühlt werden und der Innenraum kann in dem Maße beheizt werden, in welchem Wärme vom Elektromotor angeboten wird.

Aus der gattungsgemäßen EP596 000 B1 ist ein Kühlkreislauf für ein Hybridfahrzeug bekannt geworden, das eine Brennkraftmaschine, einen Elektromotor sowie eine Ansteuerschaltung für den Elektromotor enthält. Nach der Inbetriebnahme des Kraftfahrzeugs wird der Antrieb vorzugsweise ausschließlich über den Elektromotor vorgenommen. Die in der Ansteuerschaltung und im Elektromotor auftretende Verlustenergie wird zur Aufheizung der Brennkraftmaschine eingesetzt, um die Kaltstartphase der Brennkraftmaschine so weit wie möglich abzukürzen. Der Kühlkreislauf enthält einen Kühler, der einen unzulässig hohen Temperaturanstieg im Kühlkreislauf verhindert. Der Kühlkreislauf enthält als Wärmeträger herkömmliche Kühlflüssigkeit der Brennkraftmaschine.

Die EP 1 348 846 A2 zeigt eine Kühlvorrichtung eines Kraftfahrzeugs, die über Kühlwasserkreisläufe in Verbindung mit einem Verbrennungsmotor und einer Klimaanlage des Kraftfahrzeugs steht. Über einen weiteren Kühlwasserkreislauf der Kühlvorrichtung ist ein Getriebeöl-Kühler zur Regelung der Temperatur des Hydrauliköls für ein Getriebe des Kraftfahrzeugs auf eine vorgegebene Temperatur mittels eines Wärmeaustausches mit der Wassertemperatur des Kühlwassers verbunden. Auf diese Weise wird eine Reduzierung des Kraftstoffverbrauchs erreicht, ohne dabei die Leistungsfähigkeit der Klimaanlage einzuschränken.

In der DE 199 51 735 A1 ist ein Retardersystem zur Unterstützung der Bremse von Nutzkraftfahrzeugem beschrieben, bei welchem zur Abführung der im Retarder erzeugten Wärme ein Retarderkühlkreislauf vorgesehen ist, der als Wärmeträger Getriebeöl enthält. In Abhängigkeit von der mechanischen Belastung des Retarders kann die Getriebeöl-Durchflussmenge zur Erhöhung der Kühlleistung und gleichzeitig zur Absenkung der Temperatur des Getriebeöls unabhängig von den Betriebsbedingungen des Getriebes erhöht oder abgesenkt werden

Eine flüssigkeitsgekühlte Brennkraftmaschine, die beispielsweise als Antrieb in einem Kraftfahrzeugs angeordnet ist, wird im Allgemeinen mit einem Kühlmittelgemisch aus Wasser und beispielsweise Glycol gekühlt, wobei die Soll-Betriebstemperatur der Brennkraftmaschine in einem Bereich von beispielsweise 90 °C bis 110°C liegen kann.

Automatisierte Schaltgetriebe, insbesondere Automatikgetriebe, enthalten im Allgemeinen eine Ölpumpe, um mit Öldruck die Steller im Getriebe zu betätigen und die Schmierung des Getriebes sicherzustellen. Aufgrund der gegenüber einfache Schaltgetrieben möglichen höheren Wärmeverluste von Automatikgetrieben kann ein Getriebeöl-Kühlkreislauf vorgesehen sein. Die Betriebstemperatur eines Getriebes liegt beispielsweise zwischen 60 °C und 90 °C.

Der Erfindung liegt die Aufgabe zugrunde, ein Verfahren zur Beeinflussung der Temperatur eines elektromechanischen Bauteils sowie eine Vorrichtung zur Durchführung des Verfahrens anzugeben, die einen hohen Wirkungsgrad ermöglichen.

Die Aufgabe wird durch die in den unabhängigen Ansprüchen angegebenen Merkmal jeweils gelöst.

### Vorteile der Erfindung

Die erfindungsgemäße Vorgehensweise zur Beeinflussung der Temperatur wenigstens eines in einem Kraftfahrzeug angeordneten elektromechanischen Bauteils, bei dem ein im Kraftfahrzeug angeordnetes Getriebe mit einem in einem Getriebe-Kühlkreislauf strömenden Getriebeöl gekühlt wird, bei dem weiterhin ein Kühlkreislaufzweig zur Beeinflussung der Temperatur des elektromechanischen Bauteils vorgesehen ist, in welchem ebenfalls das Getriebeöl als Wärmeträger strömt, sieht vor, dass der Durchfluss des Getriebeöls im Kühlkreislaufzweig zur Beeinflussung der Temperatur des elektromagnetischen Bauteils in Abhängigkeit von der Soll-Betriebstemperatur und/oder der Ist-Betriebstemperatur des elektromagnetischen Bauteils beeinflusst wird.

Die Soll-Betriebstemperatur ist nicht nur als eine ganz bestimmte Temperatur anzusehen, sondern betrifft vielmehr allgemein einen vorgegebenen Soll-Temperaturbereich, der im Folgenden ebenfalls als Soll-Betriebstemperatur bezeichnet wird.

Die erfindungsgemäße Vorgehensweise ermöglicht sowohl ein Erreichen der Soll-Betriebstemperatur des elektromechanischen Bauteils als auch eine Einhaltung der Soll-Betriebstemperatur im Dauerbetrieb. Damit ist sichergestellt, dass das elektromechanische Bauteil mit dem größtmöglichen Wirkungsgrad betrieben wird, der bei der Soll-Betriebstemperatur auftritt. Insbesondere ermöglicht die erfindungsgemäße Vorgehensweise, dass die Ist-Betriebstemperatur des elektromechanischen Bauteils nach oben begrenzt wird.

Ein weiterer Vorteil der erfindungsgemäßen Vorgehensweise ergibt sich durch eine Verringerung des erforderlichen Aufwands für die Realisierung der Kühlkreisläufe durch die teilweise Nutzung von vorhandenen Komponenten des Getriebe-Kühlkreislaufs durch den Kühlkreislaufzweig.

Die erfindungsgemäße Vorgehensweise ermöglicht sowohl eine Kühlung als auch eine Erwärmung des elektromechanischen Bauteils in Abhängigkeit von der Temperatur des als Wärmeträger verwendeten Getriebeöls.

Vorteilhafte Weiterbildungen und Ausgestaltungen der erfindungsgemäßen Vorgehensweise ergeben sich aus abhängigen Ansprüchen.

Gemäß einer Ausgestaltung ist vorgesehen, dass der Durchfluss des Getriebeöls im Kühlkreislaufzweig auf die Soll-Betriebstemperatur des elektromechanischen Bauteils geregelt wird. Mit dieser Maßnahme kann ein Einhalten der Soll-Betriebstemperatur im Dauerbetrieb sichergestellt werden. Insbesondere kann mit dieser Maßnahme stets eine ausreichende Kühlung des elektromechanischen Bauteils erreicht werden.

Eine Ausgestaltung, die zur Einsparung von Bauteilen führt, sieht vor, dass das im Kühlkreislaufzweig strömende Getriebeöl dem Getriebe-Kühlkreislauf entnommen wird. Damit wird insbesondere der Aufwand für Rohre und/oder Schläuche reduziert.

Eine Ausgestaltung sieht vor, dass der Durchfluss des Getriebeöls im Kühlkreislaufzweig unabhängig vom Durchfluss im Getriebe-Kühlkreislauf beeinflusst wird. Mit dieser Maßnahme werden die Möglichkeiten zur Beeinflussung der Temperaturen einerseits des Getriebes und andererseits des elektromechanischen Bauteils voneinander entkoppelt.

Eine andere Ausgestaltung sieht vor, dass der Durchfluss des Getriebeöls im Kühlkreislaufzweig in Abhängigkeit von der Differenz zwischen der Ist-Temperatur des elektromechanischen Bauteils und der Getriebeöltemperatur beeinflusst wird. Mit dieser Maßnahme wird sichergestellt, dass das elektromechanische Bauteil bei einer zu hohen Getriebeöltemperatur nicht auf eine oberhalb der Soll-Betriebstemperatur liegende Temperatur aufgeheizt wird.

Eine Ausgestaltung sieht vor, dass das vom Getriebe erwärmte Getriebeöl zur Temperaturerhöhung eines elektromechanischen Bauteils herangezogen wird, das beispielsweise einen optimalen Wirkungsgrad bei einer gegenüber der Umgebungstemperatur erhöhten Soll-Betriebstemperatur aufweist. Im Allgemeinen ist davon auszugehen, dass die Erwärmung des Getriebes Vorrang hat, sodass diese Ausgestaltung zweckmäßigerweise nur dann zum Tragen kommt, wenn die Getriebe-Soll-Betriebstemperatur bereits erreicht ist oder sogar eine Verminderung der Temperatur des Getriebeöls erforderlich ist. Dann kann die im Getriebe auftretende Verlustleistung dazu herangezogen werden; das elektromechanische Bauteil möglichst rasch auf seine Soll-Betriebstemperatur und damit in den Temperaturbereich des höchsten Wirkungsgrads zu bringen. Sofern die Erwärmung des elektromechanischen Bauteils aufgrund seiner Verlustleistung schneller erfolgt als die des Getriebes, ist durch die Verbindung der beiden Kühlkreisläufe eine entsprechende Aufheizung der Temperatur im Getriebe auf die Getriebe-Soll-Betriebstemperatur durch die Verlustwärme des elektromechanischen Bauteils ohnehin sichergestellt.

Die erfindungsgemäße Vorrichtung zur Durchführung des Verfahrens betrifft zunächst ein Steuergerät, das zur Durchführung des Verfahrens hergerichtet ist. Das Steuergerät enthält vorzugsweise wenigstens einen elektrischen Speicher, in dem die Verfahrensschritte als Computerprogramm abgelegt sind.

Eine zweckmäßige Ausgestaltung der erfindungsgemäßen Vorrichtung sieht vor, dass das elektromechanische Bauteil wenigstens ein Elektromotor ist. Der Elektromotor kann beispielsweise als Antriebsmotor in einem Kraftfahrzeug eingesetzt werden. Insbesondere kann mit der erfindungsgemäßen Vorgehensweise ein Hybridfahrzeug mit hohem Wirkungsgrad betrieben werden, das neben dem wenigstens einen Elektromotor wenigstens eine Brennkraftmaschine enthält.

Eine Ausgestaltung sieht vor, dass der Elektromotor wenigstens eine Ölpumpe für das Getriebeöl im Kühlkreislaufzweig und/oder im Getriebe-Kühlkreislauf zur Bereitstellung des Durchflusses antreibt. Mit dieser Maßnahme wird ein separater Antrieb zur Aufrechterhaltung des Durchflusses vermieden.

Eine einfache Realisierung der erfindungsgemäßen Vorrichtung wird dadurch möglich, dass im Getriebe-Kühlkreislauf ein Stellventil angeordnet ist, welches in Abhängigkeit von der Ist-Temperatur des elektromechanischen Bauteils den Durchfluss im Kühlkreislaufzweig beeinflusst.

Eine alternative Ausgestaltung sieht vor, dass der Kühlkreislaufzweig eine separate Ölpumpe enthält, mit welcher der Durchfluss im Kühlkreislaufzweig unabhängig vom Durchfluss im Getriebe-Kühlkreislauf beeinflusst werden kann.

Eine andere Ausgestaltung sieht den Einsatz wenigstens eines Ölkühlers vor, der gegebenenfalls einen Bypass aufweist. Mit dieser Maßnahme kann insbesondere eine ausreichende Kühlleistung sowohl des Getriebe-Kühlkreislaufs als auch des Kühlkreislaufzweigs sichergestellt werden.

Weitere vorteilhafte Weiterbildungen und Ausgestaltungen der erfindungsgemäßen Vorgehensweise ergeben sich aus weiteren abhängigen Ansprüchen und aus der folgenden Beschreibung.

### Zeichnung

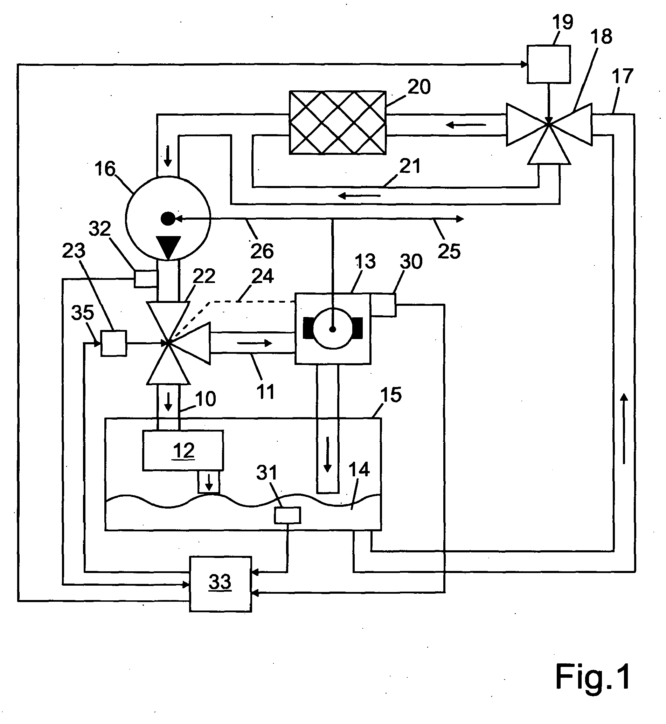

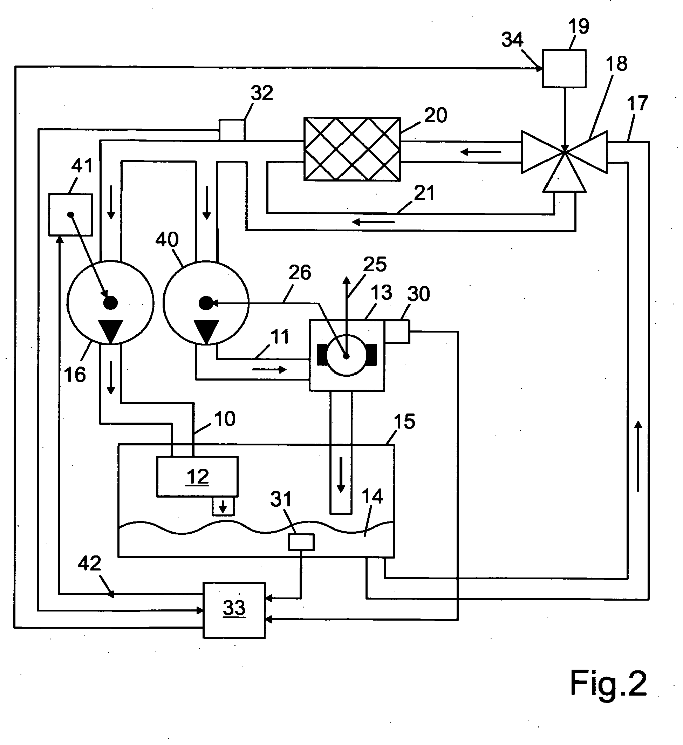

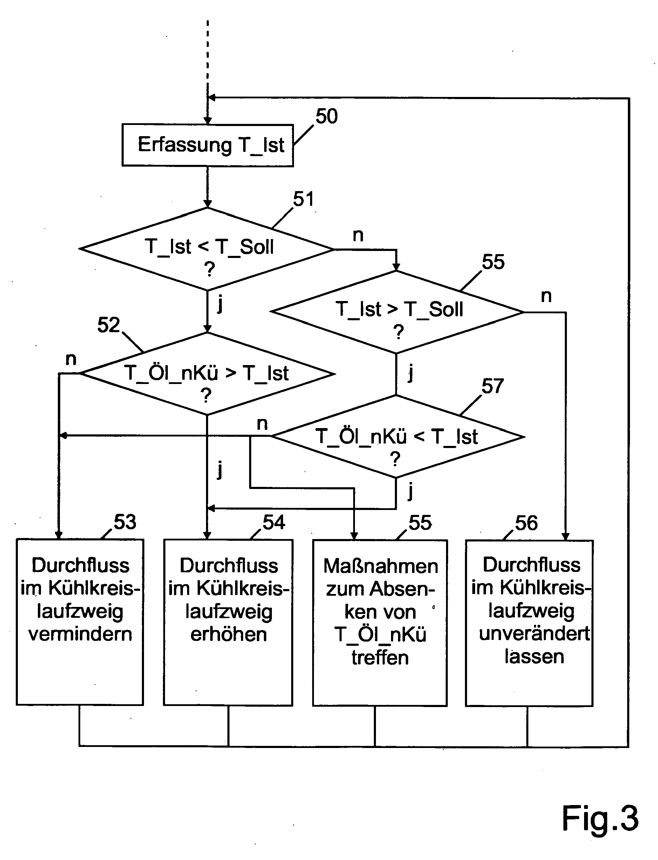

Figur 1 zeigt ein erstes Ausführungsbeispiel einer Vorrichtung zur Beeinflussung der Temperatur wenigstens eines in einem Kraftfahrzeug angeordneten elektromechanischen Bauteils, Figur 2 zeigt eine alternative Ausgestaltung der Vorrichtung und Figur 3 zeigt ein Flussdiagramm eines erfindungsgemäßen Verfahrens.

Figur 1 zeigt einen Getriebe-Kühlkreislauf 10 und einen Kühlkreislaufzweig 11. Der Getriebe-Kühlkreislauf 10 ist zur Beeinflussung der Temperatur eines Getriebes 12 und der Kühlkreislaufzweig 11 zur Beeinflussung der Temperatur eines elektromechanischen Bauteils 13 vorgesehen. Beide Kühlkreisläufe 11, 12 enthalten als Wärmeträger Getriebeöl 14, das in einem Ölsumpf 15 gesammelt wird.

Zur Bereitstellung eines Durchflusses des Getriebeöls 14 in den beiden Kühlkreisläufen 10, 11 ist eine erste Ölpumpe 16 vorgesehen, die das Getriebeöl 14 über eine Ansaugleitung 17 ansaugt und zu einem Ventil 18 transportiert. Das von einem ersten Stellantrieb 19 betätigte Ventil 18 leitet das Getriebeöl über einen Ölkühler 20 und/oder über einen am Ölkühler 20 vorbeiführenden Bypass 21 bis zu einem Stellventil 22. Das von einem zweiten Stellantrieb 23 betätigte Stellventil 22 sorgt für die Aufteilung des Getriebeöls auf den Getriebe-Kühlkreislauf 10 und den Kühlkreislaufzweig 11.

Die zwischen dem elektromechanischen Bauteil 13 und dem Stellventil 22 eingetragene Linie 24 symbolisiert eine thermische Kopplung zwischen dem elektromechanischen Bauteil 13 und dem Stellventil 22.

Das elektromechanische Bauteil 13 ist über eine erste Kopplung 25 mit einer nicht näher gezeigten, vom elektromechanischen Bauteil 13 zu betätigenden oder anzutreibenden Last und über eine zweite Kopplung 26 mit der ersten Ölpumpe 16 mechanisch gekoppelt.

Die Temperatur des elektromechanischen Bauteils 13 wird von einem ersten Temperatursensor 30, die Temperatur des Getriebeöls 14 im Ölsumpf 15 von einem zweiten Temperatursensor 31 und die Temperatur stromaufwärts vor dem Stellventil 22 und nach dem Ölkühler 20 von einem dritten Temperatursensor 32 erfasst. Die Temperatursensoren 30 - 32 sind mit einem Steuergerät 33 verbunden, das ein erstes Stellsignal 34 an den ersten Stellantrieb 19 und ein zweites Stellsignal 35 an den zweiten Stellantrieb 23 abgibt.

Figur 2 zeigt eine alternative Ausgestaltung, wobei diejenigen in Figur 2 gezeigten Teile, die mit den in Figur 1 gezeigten Teilen übereinstimmen, jeweils dieselben Bezugszeichen tragen. Der wesentliche Unterschied zwischen den Ausführungsbeispielen liegt darin, dass der Kühlkreislaufzweig 11 des weiteren Ausführungsbeispiels eine separate Ölpumpe 40 aufweist. Weiterhin wird die erste Ölpumpe 16 von einem Ölpumpenantrieb 41 angetrieben, der ein Ansteuersignal 42 zugeführt erhält, welches das Steuergerät 33 bereitstellt. Gegenüber dem ersten Ausführungsbeispiel entfällt das Stellventil 22. Die zweite mechanische Kopplung führt vom elektromechanischen Bauteil 13 zur separaten Ölpumpe 40.

Figur 3 zeigt ein Flussdiagramm des erfindungsgemäßen Verfahrens, das gemäß einem ersten Funktionsblock 50 mit einer Erfassung der Ist-Temperatur T_Ist des elektromechanischen Bauteils 13 beginnt. In einer ersten Abfrage 51 wird überprüft, ob die Ist-Betriebstemperatur T_Ist des elektromechanischen Bauteils 13 kleiner ist als dessen Soll-Betriebstemperatur T_Soll.

Falls dies der Fall ist, wird in einer zweiten Abfrage 52 überprüft, ob die Getriebeöltemperatur T_Öl_nKü nach dem Ölkühler 20 größer ist als die Ist-Betriebstemperatur T_Ist des elektromechanischen Bauteils 13.

Falls dies nicht der Fall ist, wird zu einem zweiten Funktionsblock 53 gesprungen, gemäß dem der Durchfluss im Kühlkreislaufzweig 11 vermindert wird. Falls dies der Fall ist, wird zu einem dritten Funktionsblock 54 gesprungen, gemäß dem der Durchfluss im Kühlkreislaufzweig 11 erhöht wird.

Falls in der ersten Abfrage 51 festgestellt wird, dass die Ist-Betriebstemperatur T_Ist nicht kleiner als die Soll-Betriebstemperatur T_Soll ist, wird in einer dritten Abfrage 55 festgestellt, ob die Ist-Betriebstemperatur T_Ist größer als die Soll-Betriebstemperatur T_Soll ist. Falls dies nicht der Fall ist, wird gemäß einem vierten Funktionsblock 56 der Durchfluss im Kühlkreislaufzweig 11 unverändert belassen. Falls dies der Fall ist, wird in einer vierten Abfrage 57 überprüft, ob die Getriebeöltemperatur T_Öl_nKü nach dem Ölkühler 20 kleiner ist als die Ist-Betriebstemperatur T_Ist. Falls dies nicht der Fall ist, wird zum zweiten Funktionsblock 53 verzweigt. Gleichzeitig werden die in einem fünften Funktionsblock 58 vorgesehenen Maßnahmen zum Absenken der Getriebeöltemperatur T_Öl_nKü nach dem Ölkühler 20 ergriffen. Falls die Getriebeöltemperatur T_Öl_nKü nach dem Ölkühler 20 kleiner ist als die Ist-Betriebstemperatur T_Ist, wird zum dritten Funktionsblock 54 gesprungen.

Das erfindungsgemäße Verfahren arbeitet folgendermaßen:

Der Getriebeöl-Kühlkreislauf 10 ist zur Beeinflussung der Temperatur des Getriebes 12 vorgesehen. Der Getriebeöl-Kühlkreislauf 10 ist insbesondere zur Kühlung des Getriebes 12 vorgesehen, um das Getriebe 12 im Dauerbetrieb auf einer Getriebe-Soll-Betriebstemperatur zu halten, die beispielsweise zwischen 60°C und 90 °C liegt. Der Getriebe-Kühlkreislauf 10 enthält die Ansaugleitung 17, die das Getriebeöl 14 ansaugt, das im Ölsumpf 15 gesammelt wird.

Das in der Ansaugleitung 17 fließende Getriebeöl 14 kann im Ölkühler 20 gekühlt werden. Der Ölkühler 20 ist beispielsweise ein Wärmetauscher, der die Wärme an die Umgebungsluft abgibt. Der Ölkühler 20 kann vorzugsweise als Wärmetauscher ausgebildet sein, der die Wärme an ein anderes Kühlmittel, wie beispielsweise die Kühlflüssigkeit einer nicht näher gezeigten Brennkraftmaschine abgibt.

Gemäß einer Weiterbildung kann vorgesehen sein, dass das Getriebeöl 14 bei niedrigen Temperaturen über den Bypass 21 am Ölkühler 20 vorbeigeführt wird. Die Aufteilung des Getriebeöls 14 auf den Ölkühler 20 und/oder den Bypass 21 nimmt das Ventil 18 vor, das vom ersten Stellantrieb 19 betätigt wird, der vom ersten Stellsignal 34 angesteuert wird, welches das Steuergerät 33 in Abhängigkeit insbesondere von der vom dritten Temperatursensor 32 erfassten Getriebeöltemperatur T_Öl_nKü nach dem Ölkühler 20 bereitstellt.

Das Getriebeöl 14 gelangt über das Stellventil 22 in das Getriebe 12, dessen Temperatur zu beeinflussen, insbesondere abzusenken ist. Das Stellventil 22 wird beispielsweise in Abhängigkeit vom zweiten Stellsignal 35 betätigt, wobei das zweite Stellsignal 35 insbesondere in Abhängigkeit von der Temperatur des elektromechanischen Bauteils 13 abhängt, die beispielsweise vom ersten Temperatursensor 30 erfasst wird. Anstelle der Messung der Temperatur des elektromechanischen Bauteils 13 kann im Steuergerät 33 eine Schätzung der Betriebstemperatur des elektromechanischen Bauteils 13 in Abhängigkeit von elektrischen Betriebskenngrößen und/oder der Betriebsdauer des elektromechanischen Bauteils 13 und/oder der Umgebungstemperatur und/oder weiteren dem Steuergerät 33 bekannten Größen geschätzt werden.

Gemäß einer vorteilhaften Ausgestaltung entfällt der zweite Stellantrieb 23. Das Stellventil 22 kann beispielsweise als Thermoventil ausgestaltet sein, das mit dem elektromechanischen Bauteil 13 thermisch gekoppelt wird. Die thermische Kopplung ist in Figur 1 mit der Linie 24 angedeutet. Aufgrund der thermischen Kopplung teilt das Stellventil 22 das Getriebeöl 14 zwischen dem Getriebe 20 und dem elektromechanischen Bauteil 13 in Abhängigkeit von der Ist-Temperatur T_Ist des elektromechanischen Bauteils 13 auf.

Der Durchfluss im Kühlkreislaufzweig 11 wird kann auf die Einhaltung der vorgegeben nen Soll-Betriebstemperatur T_Soll des elektromechanischen Bauteils 13 geregelt werden, um das elektromechanische Bauteil 13 im Dauerbetrieb im Bereich seines optimalen Wirkungsgrads zu halten.

Sofern die Temperatur des elektromechanischen Bauteils 13 unterhalb der Soll-Betriebstemperatur T_Soll liegt, und die Getriebeöltemperatur höher liegt, kann gemäß einer Ausgestaltung vorgesehen sein, das im Kühlkreislaufzweig 11 strömende Getriebeöl 14 zum raschen Aufheizen des elektromechanischen Bauteils 13 auf die Soll-Betriebstemperatur T_Soll heranzuziehen. Diese Maßnahme kann insbesondere vorgesehen sein, wenn die Getriebe-Soll-Betriebstemperatur bereits erreicht ist. Zu diesem Zweck wird das Stellventil 22 insbesondere in Abhängigkeit von der Differenz der Getriebeöltemperatur und der Ist-Temperatur T_Ist sowie in Abhängigkeit von der Soll-Betriebstemperatur T_Soll betrieben.

In der ersten Abfrage 51 wird festgestellt, ob die Ist-Betriebstemperatur T_Ist kleiner als die Soll-Betriebstemperatur T_Soll ist. Falls dies der Fall ist, wird in der zweiten Abfrage 52 überprüft, ob die Getriebeöltemperatur T_Öl_nKü nach dem Ölkühler 20 größer ist als die Ist-Betriebstemperatur T_Ist. Falls dies nicht der Fall ist, wird zum zweiten Funktionsblock 53 verzweigt, gemäß dem der Durchfluss im Kühlkreislaufzweig 11 vermindert wird, um die Temperatur des elektromechanischen Bauteils 13 nicht unnötig weit abzukühlen. Falls dies jedoch der Fall ist, kann gemäß dem dritten Funktionsblock 54 der Durchfluss im Kühlkreislaufzweig 11 erhöht werden, um die Temperatur des elektromechanischen Bauteils 13 möglichst rasch auf die Soll-Betriebstemperatur T_Soll zu erhöhen. Diese Maßnahme ist, wie bereits erwähnt, nur dann sinnvoll, wenn die Getriebe-Soll-Betriebstemperatur bereits erreicht ist und darüber hinaus Wärmeenergie zur Verfügung steht.

Falls in der ersten Abfrage 51 festgestellt wird, dass die Ist-Betriebstemperatur T_Ist nicht kleiner als die Soll-Betriebstemperatur T_Soll ist, wird in der dritten Abfrage 55 weiterhin überprüft, ob die Ist-Betriebstemperatur T_Ist größer ist als die Soll-Betriebstemperatur T_Soll. Diese Überprüfung ist insbesondere dann zweckmäßig, wenn die Soll-Betriebstemperatur T_Soll einem vorgegebenen Soll-Temperaturbereich entspricht, sodass auch ein größerer Bereich vorliegen kann, in welchem die Ist-Betriebstemperatur T_Ist gleich der Soll-Betriebstemperatur T_Soll ist. Falls dies der Fall ist, wird zum vierten Funktionsblock 56 verzweigt, gemäß dem der Durchfluss im Kühlkreislaufzweig unverändert belassen wird, da das elektromechanische Bauteil 13 seine Soll-Betriebstemperatur T_Soll erreicht hat und weiterhin einhalten soll.

Falls in der dritten Abfrage 55 jedoch festgestellt wird, dass die Ist-Betriebstemperatur T_Ist größer als die Soll-Betriebstemperatur T_Soll ist, wird weiterhin in der vierten Abfrage 57 überprüft, ob die Getriebeöltemperatur T_Öl_nKü nach dem Ölkühler 20 kleiner ist als die Ist-Betriebstemperatur T_Ist. Falls dies nicht der Fall ist, wird wieder zum ersten Funktionsblock 53 verzweigt, gemäß dem der Durchfluss im Kühlkreislaufzweig 11 vermindert wird, um die bereits zu hoch liegende Ist-Betriebstemperatur T_Ist nicht weiter zu erhöhen. Falls in der vierten Abfrage 57 jedoch festgestellt wird, dass die Getriebeöltemperatur T_Öl_nKü nach dem Ölkühler 20 kleiner ist als die Ist-Betriebstemperatur T Ist, wird zum zweiten Funktionsblock 54 verzweigt, gemäß dem eine Erhöhung des Durchflusses im Kühlkreislaufzweig 11 vorgesehen ist, um das elektromechanische Bauteil 13 auf die Soll-Betriebstemperatur T_Soll abzukühlen.

Anhand einer Messung oder zumindest Abschätzung der Ist-Betriebstemperatur T_Ist des elektromechanischen Bauteils 13 und/und gegebenenfalls der Getriebeöltemperatur im Ölsumpf 15 und gegebenenfalls der Getriebeöltemperatur T_Öl_nKü nach dem Ölkühler 20 kann anstelle einer Steuerung bevorzugt eine Regelung auf die Soll-Betriebstemperatur T_Soll des elektromechanischen Bauteils 13 erfolgen.

Gemäß einer bevorzugten Ausgestaltung ist als elektromechanisches Bauteil 13 wenigstens ein Elektromotor vorgesehen, der vorzugsweise als Antriebsmotor in einem Kraftfahrzeug vorgesehen ist. Dadurch kann das Kraftfahrzeug insbesondere als Hybrid-Kraftfahrzeug ausgestaltet werden, das neben dem wenigstens einen Antriebs-Elektromotor wenigstens eine Brennkraftmaschine enthält, die einerseits eine Antriebsleistung und andererseits eine elektrische Leistung zum Laden einer Batterie bereitstellen kann. Die Verwendung des elektromechanischen Bauteils 13 zum Antrieb eines Kraftfahrzeugs ist mit der ersten mechanischen Kopplung 25 in Figur 1 symbolisch eingetragen.

Gemäß einer Ausgestaltung ist vorgesehen, dass das als Elektromotor ausgestaltete elektromechanische Bauteil 13 über die zweite mechanische Kopplung 26 die erste Ölpumpe 16 antreibt, sodass ein separater Antrieb für die erste Ölpumpe 16 entfallen kann.

Sofern die Ist-Temperatur T_Ist des zu kühlenden elektromechanischen Bauteils 13 bereits im Bereich seiner Soll-Temperatur T_Soll liegt, die Temperatur des Getriebes 12 jedoch noch unterhalb der Getriebe-Soll-Betriebstemperatur liegt, kann der Getriebe-Kühlkreislauf 10 gezielt zur Erhöhung der Temperatur des Getriebes 12 herangezogen werden.

Bei dem in Figur 2 gezeigten Ausführungsbeispiel enthält der Kühlkreislaufzweig 11 die separate Ölpumpe 40, die unabhängig von der ersten Ölpumpe 16 betrieben werden kann. Während bei diesem Ausführungsbeispiel die separate Ölpumpe 40 vorzugsweise über die zweite mechanische Kopplung 26 von dem als Elektromotor ausgestalteten elektromechanischen Bauteil 13 angetrieben wird, ist zum Antrieb der ersten Ölpumpe 16 vorzugsweise der Ölpumpenantrieb 41, beispielsweise ein Elektromotor, vorgesehen.

Vorzugsweise ist auch bei diesem Ausführungsbeispiel eine Regelung der Soll-Betriebstemperatur T_Soll vorgesehen, bei der die Ist-Betriebstemperatur T_Ist entweder mit dem ersten Temperatursensor 30 gemessen oder zumindest geschätzt wird. Vorzugsweise wird wieder zusätzlich die Temperatur des Getriebeöls 14 im Ölsumpf 15 und insbesondere die Getriebeöltemperatur T_Öl_nKü nach dem Ölkühler 20 berücksichtigt, welche entweder vom dritten Temperatursensor 32 gemessen oder zumindest geschätzt werden kann.

Aufgrund der separaten Ölpumpe 40 entfällt das in Figur 1 gezeigte Stellventil 22. Der dadurch gewonnene wesentliche Vorteil liegt darin, dass der Durchfluss im Kühlkreislaufzweig 11 unabhängig vom Durchfluss im Getriebe-Kühlkreislauf 10 eingestellt werden kann. Die Steuerung oder Regelung auf die Soll-Betriebstemperatur T_Soll des elektromechanischen Bauteils 13 gemäß dem zweiten Ausführungsbeispiel entspricht wieder der anhand von Figur 3 erläuterten Steuerung oder Regelung auf die Soll-Betriebstemperatur T_Soll, sodass auch bei diesem Ausführungsbeispiel entweder eine Kühlung oder gegebenenfalls Beheizung sowohl des Getriebes als auch des elektromechanischen Bauteils 13 möglich sind.

## Patentansprüche

1. Verfahren zur Beeinflussung der Temperatur wenigstens eines in einem Kraftfahrzeug angeordneten elektromechanischen Bauteils (13), bei dem ein im Kraftfahrzeug angeordnetes Getriebe (12) mit einem in einem Getriebe-Kühlkreislauf (10) strömenden Getriebeöl (14) gekühlt wird, bei dem weiterhin ein Kühlkreislaufzweig (11) zur Beeinflussung der Temperatur des elektromechanischen Bauteils (13) vorgesehen ist, in welchem ebenfalls das Getriebeöl (14) als Wärmeträger strömt, **dadurch gekennzeichnet, dass** der Durchfluss des Getriebeöls (14) im Kühlkreislaufzweig (11) zur Beeinflussung der Temperatur des elektromechanischen Bauteils (13) im Abhängigkeit von einer Soll-Betriebstemperatur (T_Soll) und/oder Ist-Betriebstemperatur (T_Ist) des elektromechanischen Bauteils (13) beeinflusst wird.

2. Verfahren nach Anspruch 1, **dadurch gekennzeichnet, dass** der Durchfluss des Getriebeöls (14) im Kühlkreislaufzweig (11) auf die Soll-Betriebstemperatur (T__Soll) des elektromechanischen Bauteils (13) geregelt wird.

3. Verfahren nach Anspruch 1, **dadurch gekennzeichnet, dass** der Durchfluss des Getriebeöls (14) im Kühlkreislaufzweig (11) derart beeinflußt wird, das die Ist-Betriebstemperatur (T_Ist) des elektromechanischen Bauteils (13) begrenzt wird.

4. Verfahren nach Anspruch 1, **dadurch gekennzeichnet, dass** das im Kühlkreislaufzweig (11) strömende Getriebeöl (14) dem Getriebe-Kühlkreislauf (10) entnommen wird.

5. Verfahren nach Anspruch 2, **dadurch gekennzeichnet, dass** der Durchfluss des Getriebeöls (14) im Kühlkreislaufzweig (11) unabhängig vom Durchfluß im Getriebe-Kühlkreis lauf (10) beeinflusst wird.

6. Verfahren nach Anspruch 1, **dadurch gekennzeichnet, dass** der Durchfluss des Getriebeöls (14) im Kühlkreislaufzweig (11) in Abhängigkeit von der Differenz zwischen der Ist-Temperatur (T_Ist) des elektromechanischen Bauteils (13) und der Getriebeöltemperatur (T_Öl_nKü) beeinflusst wird.

7. Vorrichtung zur Beeinflussung der Temperatur wenigstens eines elektromechanischen Bauteils (13), **dadurch gekennzeichnet, dass** zumindest ein zur Durchführung des Verfahrens nach Anspruch hergerichtetes Steuergerät (33) vorgesehen ist.

8. vorrichtung nach Anspruch 7, **dadurch gekennzeichnet, dass** als elektromechanisches Bauteil (13) wenigstens ein Elektromotor vorgesehen ist.

9. Vorrichtung nach Anspruch 8, **dadurch gekennzeichnet, dass** der Elektromotor (13) wenigstens eine Ölpumpe (16, 40) für das Getriebeöl (14) im Kühlkreislaufzweig (11) und/oder im Getriebe-Kühlkreislauf (10) zur Bereitstellung des Durchflusses antreibt.

10. Vorrichtung nach Anspruch 7, **dadurch gekennzeichnet, dass** im Getriebe-Kühlkreislauf (10) ein Stellventil (22) angeordnet ist, welches in Abhängigkeit von der Ist-Temperatur (T_Ist) des elektromechanischen Bauteils (13) den Durchfluß im Kühlkreislaufzweig (11) beeinflusst.

11. Vorrichtung nach Anspruch 7, **dadurch gekennzeichnet, dass** der. Kühlkreislaufzweig (11) eine separate Ölpumpe (40) enthält.

12. Vorrichtung nach Anspruch 7, **dadurch gekennzeichnet, dass** ein Ölkühler (20) vorgesehen ist.

## Claims

1. Method for influencing the temperature of at least one electromechanical component (13) which is arranged in a motor vehicle, in which a transmission (12), which is arranged in the motor vehicle, is cooled by a transmission oil (14) which flows in a transmission cooling circuit (10), in which a cooling circuit branch (11) for influencing the temperature of the electromechanical component (13) is also provided, in which cooling circuit branch the transmission oil (14) likewise flows as a heat carrier, **characterized in that** the flow of transmission oil (14) through the cooling circuit branch (11) for influencing the temperature of the electromechanical component (13) is influenced as a function of a setpoint operating temperature (T_set) and/or actual operating temperature (T_act) of the electromechanical component (13).

2. Method according to Claim 1, **characterized in that** the flow of the transmission oil (14) through the cooling circuit branch (11) is adjusted to the setpoint operating temperature (T_set) of the electromechanical component (13).

3. Method according to Claim 1, **characterized in that** the flow of the transmission oil (14) through the cooling circuit branch (11) is influenced in such a way that the actual operating temperature (T_act) of the electromechanical component (13) is limited.

4. Method according to Claim 1, **characterized in that** the transmission oil (14) which flows in the cooling circuit branch (11) is taken from the transmission cooling circuit (10).

5. Method according to Claim 2, **characterized in that** the flow of the transmission oil (14) through the cooling circuit branch (11) is influenced independently of the flow through the transmission cooling circuit (10).

6. Method according to Claim 1, **characterized in that** the flow of the transmission oil (14) through the cooling circuit branch (11) is influenced as a function of the difference between the actual temperature (T_act) of the electromechanical component (13) and the transmission oil temperature (T_oil_ncool).

7. Apparatus for influencing the temperature of at least one electromechanical component (13), **characterized in that** at least one controller (33) which is designed to carry out the method according to Claim 1 is provided.

8. Apparatus according to Claim 7, **characterized in that** at least one electric motor is provided as the electromechanical component (13).

9. Apparatus according to Claim 8, **characterized in that** the electric motor (13) drives at least one oil pump (16, 40) for the transmission oil (14) in the cooling circuit branch (11) and/or in the transmission cooling circuit (10) for providing the throughflow.

10. Apparatus according to Claim 7, **characterized in that** a control valve (22) is arranged in the transmission cooling circuit (10), the said control valve influencing the flow through the cooling circuit branch (11) as a function of the actual temperature (T_act) of the electromechanical component (13).

11. Apparatus according to Claim 7, **characterized in that** the cooling circuit branch (11) contains a separate oil pump (40).

12. Apparatus according to Claim 7, **characterized in that** an oil cooler (20) is provided.

## Revendications

1. Procédé pour influer sur la température d'au moins un composant électromécanique (13) disposé dans un véhicule automobile, dans lequel une boîte de vitesses (12) disposée dans le véhicule automobile est refroidie avec une huile de boîte de vitesses (14) s'écoulant dans un circuit de refroidissement de boîte de vitesses (10), dans lequel en outre une branche du circuit de refroidissement (11) est prévue pour influer sur la température du composant électromécanique (13), dans laquelle l'huile de boîte de vitesses (14) s'écoule également sous forme de fluide caloporteur, **caractérisé en ce que** l'on influe sur le débit de l'huile de boîte de vitesses (14) dans la branche du circuit de refroidissement (11) en fonction d'une température de fonctionnement de consigne (T_Soll) et/ou d'une température de fonctionnement réelle (T_Ist) du composant électromécanique (13).

2. Procédé selon la revendication 1, **caractérisé en ce que** le débit de l'huile de boîte de vitesses (14) dans la branche du circuit de refroidissement (11) est régulé à la température de fonctionnement de consigne (T_Soll) du composant électromécanique (13).

3. Procédé selon la revendication 1, **caractérisé en ce que** l'on influe sur le débit de l'huile de boîte de vitesses (14) dans la branche du circuit de refroidissement (11) de telle sorte que la température de fonctionnement réelle (T_Ist) du composant électromécanique (13) soit limitée.

4. Procédé selon la revendication 1, **caractérisé en ce que** l'huile de boîte de vitesses (14) s'écoulant dans la branche du circuit de refroidissement (11) est prélevée du circuit de refroidissement de la boîte de vitesses (10).

5. Procédé selon la revendication 2, **caractérisé en ce que** l'on influe sur le débit de l'huile de boîte de vitesses (14) dans la branche du circuit de refroidissement (11) indépendamment du débit dans le circuit de refroidissement de la boîte de vitesses (10).

6. Procédé selon la revendication 1, **caractérisé en ce que** l'on influe sur le débit de l'huile de boîte de vitesses (14) dans la branche du circuit de refroidissement (11) en fonction de la différence entre la température de fonctionnement réelle (T_Ist) du composant électromécanique (13) et la température de l'huile de boîte de vitesses (T_Ôl_nKü).

7. Dispositif pour influer sur la température d'au moins un composant électromécanique (13), **caractérisé en ce que** l'on prévoit au moins un appareil de commande (33) prévu pour mettre en oeuvre le procédé selon la revendication 1.

8. Dispositif selon la revendication 7, **caractérisé en ce que** l'on prévoit comme composant électromécanique (13) au moins un moteur électrique.

9. Dispositif selon la revendication 8, **caractérisé en ce que** le moteur électrique (13) entraîne au moins une pompe à huile (16, 40) pour l'huile de boîte de vitesses (14) dans la branche du circuit de refroidissement (11) et/ou dans le circuit de refroidissement de la boîte de vitesses (10) pour fournir le débit.

10. Dispositif selon la revendication 7, **caractérisé en ce que** l'on dispose dans le circuit de refroidissement de la boîte de vitesses (10) une soupape de commande (22) qui influe sur le débit dans la branche du circuit de refroidissement (11) en fonction de la température de fonctionnement réelle (T_Ist) du composant électromécanique (13).

11. Dispositif selon la revendication 7, **caractérisé en ce que** la branche du circuit de refroidissement (11) contient une pompe à huile séparée (40).

12. Dispositif selon la revendication 7, **caractérisé en ce que** l'on prévoit un refroidisseur d'huile (20).
